# EUROPEAN PATENT APPLICATION

(11) **EP 0 719 848 A2**
(43) Date of publication of application: **03.07.1996**
(21) Application number: 95120039.3
(22) Date of filing: 19.12.1995
(51) Int. Cl.: C09D 151/00

(54) **Powder paint compositions**

(30) Priority: 28.12.1994 JP 327738/94
(71) Applicant: MITSUI TOATSU CHEMICALS, Inc., Chiyoda-Ku Tokyo 100 (JP)
(72) Inventor: Seki, Masashi, Yokohama-shi, Kanagawa-ken (JP); Kawasaki, Eiichi, Yokohama-shi, Kanagawa-ken (JP); Sekido, Takayoshi, Hiratsuka-shi, Kanagawa-ken (JP); Mizoguchi, Mitsuyuki, Yokohama-shi, Kanagawa-ken (JP); Miyawaki, Takahisa, Yokohama-shi, Kanagawa-ken (JP)
(74) Representative: Strehl Schübel-Hopf Groening & Partner

(57) **Abstract**

A heat-curable powder paint composition comprising a copolymer (A) obtained by radical copolymerization of (a1) a monomer having both an unsaturated double bond and a non-radical-polymerizable reactive functional group (e.g. glycidyl or hydroxyl group), (a2) a monomer having no reactive functional group other than an unsaturated double bond, and (a3) a silicone macromer having essentially no reactive functional group other than an unsaturated double bond in a specific ratio; and curing agent (B).

The paint composition of this invention can achieve excellent performance simultaneously with respect to storage stability and coating film properties (such as appearance characteristics, physical characteristics and chemical characteristics).

## Description

### Background of the Invention:

### a. Filed of the Invention:

This invention relates to heat-curable powder paint compositions. More particularly, it relates to heat-curable powder paint compositions which can form a baked coating film having excellent appearance characteristics (e.g., smoothness and brightness), physical characteristics (e.g., impact resistance, adhesion, mar resistance and recoatability), weather resistance, ultraviolet light resistance and chemical characteristics (e.g., acid rain resistance and solvent resistance) and, moreover, has excellent storage stability.

### b. Description of the Prior Art:

Powder paints possess many advantages over solution paints, for example, in that they involve little risk of fire or toxicity and have high workability. Accordingly, their field of application has been expanded in recent years. Among others, heat-curable acrylic resins are regarded as most promising because of their high gloss, weather resistance, chemical resistance and mechanical strength, and various attempts have been made to develop a heat-curable acrylic resin for use in powder paints.

As a conventional powder paint composition containing a heat-curable acrylic resin, a composition comprising an acrylic resin formed by the copolymerization of an alkyl ester of acrylic or methacrylic acid and a glycidyl ester of acrylic or methacrylic acid and having a molecular weight of 1,000 to 30,000, and a heat-curing agent is commonly used (see, for example, German Patent Laid-Open Nos. 2,057,577 and 2,014,914). However, the coating film formed from this composition is not always satisfactory from the viewpoint of smoothness, strength, chemical resistance and adhesion to metals.

Moreover, a composition containing, an acrylic resin and a curing agent, and additionally a cellulose derivative to improve the smoothness of the coating film (see, for example, Japanese Patent Laid-Open No. 7943/'73) and a composition containing a polyvalent epoxy resin to improve the chemical resistance and adhesion of the coating film (see, for example, Japapese Patent Laid-Open No. 17844/'73) have also been proposed. However, the coating films formed from powder paints comprising these compositions are not always satisfactory from the viewpoint of strength.

With regard to solution paints, Japanese Patent Laid-Open No. 151272/'86 discloses a highly weather-resistant paint having a resin component consisting essentially of a graft polymer formed by the radical copolymerisation of (A) a radical-polymerizable compound composed chiefly of a (meth)acrylate, (B) a radical-polymerizable silicone macromonomer and (C) a crosslinkable monomer having a non-radical-polymerizable reactive functional group. However, because the silicone macromonomer in this paint is used at a high concentration (10 to 30% by weight) for the graft polymer, the coating film formed of the paint is poor in brightness and recoatability although it is excellent in weather resistance and solvent resistance. Moreover, the highly weather-resistant paint is a solution paint, that is clearly understood from the compositions of the resin, the curing agent and the others, and from the description in the examples. Solution paints are undesirable from the viewpoint of environmental protection and resource conservation as follows.

That is, environmental problems such as atmospheric pollution, ozone layer depletion, global warming and acid rain have recently aroused great concern. Especially in the technical field of paints, when viewed from the standpoint of producers, atmospheric pollution caused by the organic solvent which is produced in large amounts during coating or baking and discharged into the environment is a matter of concern. On the other hand, when viewed from the standpoint of consumers, the durability of the coating film exposed to meteorological phenomena (e.g., rain, snow, mist and smog), soil or sewage which have been significantly acidified in recent years is a matter of concern. Moreover, since the use of solution paints requires closed type equipment which can prevent the organic solvent from escaping into the atmosphere, solution paints are economically disadvantageous as compared with powder paints which do not require such large-scale equipment. Accordingly, it is very effective for purposes of environmental protection and resource conservation to use powder paints rather than solution paints, and the transition from solution paints to powder paints is the trend of the times.

However, in spite of the growing demand for powder paints on such a background, the conventional powder paint art is still problematic in that the coating films formed by heat curing are inferior to those formed by the solution paint art in appearance characteristics (e.g., smoothness and brightness), physical characteristics (e.g., impact resistance, adhesion, mar resistance and recoatability), weather resistance, ultraviolet light resistance and chemical characteristics (e.g., acid rain resistance and solvent resistance). Among others, the problems of acid rain resistance, solvent resistance and mar resistance are serious.

With regard to the powder paint art, techniques for forming a coating film on a substrate (or ground) by coating the substrate (or ground) with a heat-curable powder paint containing a resin component comprising an acrylic polymer having glycidyl groups and a curing agent component comprising a dicarboxylic or polycarboxylic acid anhydride, and then curing it by the application of heat are well known as disclosed, for example, in U.S. Patent 3,845,016 (Labana et al.), U.S. Patent 3,919,347 and Japanese Patent Laid-Open No. 112743/'93. However, the coating films formed by these techniques are excellent in appearance characteristics (such as smoothness), but poor especially in such properties as acid rain resistance, solvent resistance and mar resistance.

Japanese Patent Laid-Open No. 271616/'93 discloses a powder coating composition comprising (A) an ε-caprolactam-blocked polyisocyanate based on the reaction product of 4,4-diisocyanatodicyclohexylmethane and a polyol component, (B) a polyol component containing a polyhydroxy polyacrylate having an OH value of 40 to 120, and (C) an organotin catalyst. However, the coating film formed from this composition is excellent in solvent resistance and adhesion, but poor in acid rain resistance and mar resistance.

In an attempt to solve the above-described problems of the prior art, research and development has been pushed wherein a silicone compound having no reactive functional group is added to the resin component of a paint composition and thus modifying the surface properties of the coating film. However, this technique has problem that the silicone compound has poor compatibility with other components regarding the preparation of such a paint composition. Moreover, in the formation of a coating film, the paint film tends to be repelled or rejected by the substrate (or ground) and form an imperfect coating. Furthermore, the silicone component is not grafted to the resin or curing agent either before or after the formation of a coating film, so that the resulting coating film is poor in brightness and solvent resistance.

In another attempt to solve the above-described problems of the prior art, research and development has been pushed forward wherein a silicone compound having a reactive functional group (e.g., silanol or alkoxysilyl group) is incorporated into the resin component of a paint composition and thus modifying the surface properties of the coating film, as disclosed, for example, in U.S. Patent 4,877,837 (Reising et al.). However, the powder paint composition has the disadvantage that its storage stability is very poor owing to the highly reactive silanol or alkoxysilyl group present in the silicone compound.

Japanese Patent Publication No. 43311/'91 discloses a powder coating composition comprising a vinyl copolymere composed of a glycidyl-containing vinyl monomer, a silicon-containing vinyl monomer and other monomers, and an aliphatic dibasic acid. The silicon-containing vinyl monomer used in this composition is a compound having a highly reactive functional group (such as alkoxysilyl group) other than a vinyl-polymerizable unsaturated bond and having only one silicon atom per molecule. The coating film formed from this powder paint composition is excellent in smoothness and brightness. However, the paint composition has poor storage stability and, moreover, the coating film is poor in acid rain resistance and solvent resistance, because the silicon-containing vinyl monomer has a highly reactive functional group and the content of silicone in the molecule is low.

The problems described above can be summarized as follows. The conventional art concerning heat-curable powder paint compositions containing a silicone compound have at least one of the following problems (1) to (4).
(1) In the preparation of a paint composition or a resin component, the silicone compound has low compatibility with other components.
(2) In the formation of a coating film, the paint film tends to be repelled or rejected by the substrate (or ground) and thus form an imperfect coating.
(3) It is difficult to achieve excellent performance simultaneously with respect to coating film properties such as appearance characteristics (e.g., smoothness and brightness), physical characteristics (e.g., mar resistance and recoatability), weather resistance, ultraviolet light resistance and chemical characteristics (e.g., acid rain resistance and solvent resistance).
(4) Storage stability of a paint composition is poor.

### Summary of the Invention:

It is an object of the present invention to solve the above-described problems (1) to (4). That is, it is the object to provide a heat-curable powder paint composition which shows excellent performance simultaneously with respect to all of (1) compatibility in the preparation of a paint composition, (2) the perfect coating of a substrate (or ground) with a paint film, (3) remarkable improvement of appearance characteristics (e.g., smoothness and brightness), physical characteristics (e.g., impact resistance, and recoatability), weather resistance, ultraviolet light resistance and chemical resistance (e.g., acid rain resistance and solvent resistance) ― particularly in acid rain resistance, recoatability, solvent resistance and mar resistance ― of the paint film formed by heat curing, and (4) storage stability.

The above-described object of the present invention can be accomplished by a heat-curable powder paint composition comprising a copolymer (A) and a curing agent (B)
wherein copolymer (A) is obtained by radical copolymerization in a reaction system containing
(a1) at least one monomer having both at least one radical-polymerizable unsaturated double bond and at least one non-radical-polymerizable reactive functional group in the molecule,
(a2) at least one monomer having at least one radical-polymerizable unsaturated double bond in the molecule but having no reactive functional group other than an unsaturated double bond, and
(a3) at least one silicone macromer having at least one radical-polymerizable unsaturated double bond in the molecule but having essentially no reactive functional group other than an unsaturated double bond,
   in a ratio of 0.005 to 2.0 parts by weight of silicone macromer (a3) per 100 parts by weight of the combination of monomers (a1) and (a2); and
   curing agent (B) has, in the molecule, at least two functional groups capable of crosslinking reaction with the non-radical-polymerizable reactive functional group in copolymer (A).

According to the present invention, it has first become possible to achieve excellent performance simultaneously with respect to all of the points (1) to (4) which could not easily be solved by the prior art concerning paint compositions using a silicone compound.

The coating film formed from the powder paint composition of the present invention exhibits very excellent weather resistance and acid rain resistance. In the present invention, copolymer (A) is formed by using the specific silicone macromer (a3) as a comonomer, silicone components such as oligomeric or polymeric dimethylsiloxane segments in the molecule of silicone macromer (a3) are not directly linked to monomer components such as monomers (a1) and (a2). This seems to be the reason for that excellent hydrolytic resistance and weather resistance are achieved. In addition, characteristic properties of silicones, such as water repellency, antifouling properties, thermal resistance and abrasion resistance, are also imparted to the coating film.

Moreover, in the present invention, excellent recoatability as well as solvent resistance, acid rain resistance and mar resistance and brightness, can also be imparted to the coating film by specifying the amount of silicone macromer (a3) used.

Furthermore, in the present invention, since curing agent (B) having at least two functional groups capable of crosslinking reaction with the non-radical-polymerizable reactive functional group in copolymer (A) is compounded in the heat-curable powder paint composition, a paint film exhibits excellent chemical resistance, water resistance and thermal resistance and, moreover, exhibits markedly excellent weather resistance by heat curing and closslinking it.

### Description of the Preferred Embodiments:

### [Monomer (a1)]

No particular limitation is placed on the type of monomer (a1) constituting copolymer (A) in the present invention, provided that it is a compound having both at least one radical-polymerizable unsaturated double bond and at least one non-radical-polymerizable reactive functional group in the molecule. It may be one or more such compound. The non-radical-polymerizable reactive functional groups in monomer (a1) remain after forming copolymer (A) and contribute to curing the paint film by crosslinking reaction with the functional groups in curing agent (B). The non-radical-polymerizable reactive functional group in monomer (a1) is, for example, epoxy group (particularly, glycidyl group), hydroxyl group, carboxyl group or acid anhydride group. Especially, glycidyl group and hydroxyl group are preferred.

Specific examples of monomer (a1) include glycidyl acrylate, glycidyl methacrylate, β-methylglycidyl acrylate, β-methylglycidyl methacrylate, N-glycidylacrylamide, allyl glycidyl ether, glycidyl vinylsulfonate, 2-hydroxyethyl acrylate, 2-hydroxyethyl methacrylate, 4-hydroxybutyl acrylate, 4-hydroxybutyl methacrylate, 2-hydroxypropyl acrylate, 2-hydroxypropyl methacrylate, acrylic acid, methacrylic acid, maleic anhydride, itaconic acid and maleic acid. Among these compounds, glycidyl acrylate, glycidyl methacrylate, 2-hydroxyethyl acrylate, 2-hydroxyethyl methacrylate, 4-hydroxybutyl acrylate, 4-hydroxybutyl methacrylate, 2-hydroxypropyl acrylate and 2-hydroxypropyl methacrylate are preferred, and glycidyl methacrylate and 2-hydroxyethyl methacrylate are more preferred. These compounds may be used alone or in admixture of two or more.

Monomer (a1) is preferably used in an amount of 15 to 60 parts by weight, more preferably 20 to 50 parts by weight, furthermore preferably 30 to 50 parts by weight, per 100 parts by weight of the combination of monomers (a1) and (a2). The use of monomer (a1) in not less than the specific amount described above (preferably 15 parts by weight, more preferably 20 parts by weight, furthermore preferably 30 parts by weight) causes more excellent results in crosslinking density, acid rain resistance, mar resistance and solvent resistance of the resulting coating film and the like. On the other hand, the use of monomer (a1) in not more than the specific amount described above (preferably 60 parts by weight, more preferably 50 parts by weight) causes excellent results in smoothness and brightness of the resulting coating film and storage stability of the paint composition and the like.

### [Monomer (a2)]

No particular limitation is placed on the type of monomer (a2) constituting copolymer (A) in the present invention, provided that it is a compound having at least one radical-polymerizable unsaturated double bond in the molecule but having no reactive functional group other than an unsaturated double bond. It may be one or more such compound. Therein, the expression "compound having no reactive functional group other than an unsaturated double bond" means that it has no reactive functional group contributing to curing the paint film by crosslinking reaction with the functional groups in curing agent (B), that is, it has no reactive functional group like the non-radical-polymerizable reactive functional groups in monomer (a1).

Examples of monomer (a2) include carboxylic acid esters having an unsaturated group, unsaturated hydrocarbons, nitriles having an unsaturated group, and amides having an unsaturated group. Among them, carboxylic acid esters having an unsaturated group are preferred.

Specific examples of monomer (a2) include acrylic acid derivatives such as methyl acrylate, ethyl acrylate, n-propyl acrylate, isopropyl acrylate, n-butyl acrylate, isobutyl acrylate, sec-butyl acrylate, tert-butyl acrylate, hexyl acrylate, cyclohexyl acrylate, 2-ethylhexyl acrylate, octyl acrylate, 2-ethyloctyl acrylate, dodecyl acrylate, stearyl acrylate, benzyl acrylate, phenyl acrylate and dimethylamino acrylate; methacrylic acid derivatives such as methyl methacrylate, ethyl methacrylate, n-propyl methacrylate, isopropyl methacrylate, n-butyl methacrylate, isobutyl methacrylate, sec-butyl methacrylate, tert-butyl methacrylate, hexyl methacrylate, cyclohexyl methacrylate, 2-ethylhexyl methacrylate, octyl methacrylate, 2-ethyloctyl methacrylate, dodecyl methacrylate, phenyl methacrylate, stearyl methacrylate, benzyl methacrylate and dimethylamino methacrylate; eaters of dicarboxylic acids such as maleic acid and itaconic acid; and amides such as acrylamide and methacrylamide. These compounds may be used alone or in admixture of two or more.

Other specific examples of monomer (a2) are ethylenically unsaturated monomers including aromatic vinyl monomers such as styrene, α-methylstyrene and vinyltoluene; halogenated ethylenically unsaturated monomers such as vinyl chloride, vinylidene chloride, vinyl fluoride and monochlorotrifluoroethylene; nitriles such as acrylonitrile and methacrylonitrile; aliphatic vinyl esters such as vinyl acetate; α-olefins such as ethylene, propylene and α-olefins having 4 to 20 carbon atoms; alkyl vinyl ethers such as lauryl vinyl ether. These compounds may be used alone or in admixture of two or more.

Monomer (a2) is preferably used in an amount of 40 to 85 parts by weight, more preferably 50 to 80 parts by weight, furthermore preferably 50 to 70 parts by weight, per 100 parts by weight of the combination of monomers (a1) and (a2).

Where styrene is used as a partial constituent of monomer (a2), it is preferably used in an amount of 1 to 30 parts by weight, more preferably 10 to 20 parts by weight, per 100 parts by weight of the combination of monomer (a2). In this case, the whole amount of monomers (a1) and (a2) is preferably 40 to 85 parts by weight, more preferably 50 to 80 parts by weight. The use of styrene as a partial constituent of monomer (a2) is advantageous in that the storage stability of the paint composition can be improved and in that good gloss and smoothness can be imparted to the coating film. Moreover, the use of styrene in not more than the specific amount described above (preferably 30 parts by weight, more preferably 20 parts by weight) causes more excellent results in prevention of yellowing and weather resistance of the resulting coating film and the like.

### [Silicone macromer (a3)]

No particular limitation is placed on the type of silicone macromer (a3) constituting copolymer (A) in the present invention, provided that it is a silicone macromer having at least one radical-polymerizable unsaturated double bond in the molecule but having essentially no reactive functional group other than an unsaturated double bond. It may be one or more such compounds.

The concept of the term "macromer" as used in the claims and specification of the present application comprehends the concept described under the head of "macromer" in "New Dictionary of Polymers" (ed. by the Polymer Society of Japan, Asakura Shoten, 1988), p. 441, right column, and the concept described under the head of "macromer" in "MARUZEN's Comprehensive Dictionary of Polymers" (Maruzen, 1994), p. 1136. All of this description can be regarded as a part of the disclosure of the specification of the present application by clearly expressing cited literature and cited scope described above, and the description is also regarded as a matter or disclosure understood directly as one meaning by a person skilled in the art, by referring the clearly expressed cited scope in view of the matter or the disclosure described in the specification of the present application.

Originally, the term "macromer" was a trade name for a product of PPG Industries. At present, this term has come to be generally used among those skilled in the art as a common name designating a macromolecular monomer or macromonomer for short, and has become a technical term commonly used in the field of polymer chemistry. The concept of the term "macromer" comprehends oligomers having a polymerizable functional group (such as a double bond) at a terminus of the molecule or within the molecule. In general, macromers have been used for synthesize graft or block copolymers having a well-defined structure by copolymerization with various functional comonomers. The number-average molecular weight of a macromer generally ranges from several thousands to several tens of thousands, but is not necessarily limited thereto.

The concept of the term "silicone macromer" used in the claims and specification of the present application comprehends the general concept of silicone type macromers (covering the concepts of oligomers, macromonomers, macromolecular monomers, macromers, graft polymers and the like) as described, for example, in "The Chemistry and Industry of Macromers" (written and edited by Tatsuya Yamashita, IPC, 1989) (see, for example, pp. 357-376 and pp. 397-419). All of this description can be regarded as a part of the disclosure of the specification of the present application by clearly expressing cited literature and cited scope described above, and the description is also regarded as a matter or disclosure understood directly as one meaning by a person skilled in the art, by referring the clearly expressed cited scope in view of the matter or the disclosure described in the specification of the present application.

In the present invention, it is necessary that silicone macromer (a3) should have essentially no reactive functional group other than an unsaturated double bond. In the present invention, the problems of prior arts concerning heat-curable powder paint compositions containing a silicone compound can be simultaneously solved by using such specific silicone macromer (a3).

That is, if silicone macromer (a3) has a certain, highly reactive functional group other than the unsaturated double bond in the molecule, it may undergo an undesirable reaction with the other monomers, copolymer, curing agent or the like. For example, if copolymer (A) is formed by using such silicone macromer, a resin component containing such copolymer (A) may undergo gelation. For example, if a paint composition is prepared by using such copolymer (A), it show a reduction in storage stability. In contrast, such problems do not appear in the present invention because silicone macromer (a3) has essentially no such reactive functional group. In other words, the reactive functional group that silicone macromer (a3) does not have is a group undergoing an undesirable reaction described above. Typical example of the group is silanol or alkoxysilyl group. Moreover, the expression "silicone macromer (a3) have essentially no such group" means that the concept of silicone macromer (a3) in the present invention includes a compound having a few such groups, but the groups do not effect to cause such problems in paint compositions.

The number-average molecular weight (Mn) of silicone macromer (b3) is preferably in the range of 1,000 to 70,000, more preferably in the range of 3,000 to 60,000, furthermore preferably in the range of 10,000 to 50,000. The use of silicone macromer (b3) having Mn of not less than the specific value described above (preferably 1,000, more preferably 3,000, furthermore preferably 10,000) causes more excellent results in preventing of repelling or rejecting by the substrate (or ground) of the paint film and preventing a imperfect coating the film in paint film forming. Moreover, regarding paint film properties, it causes more excellent results in brightness, acid rain resistance and solvent resistance. On the other hand, the use of silicone macromer (b3) having Mn of not more than the specific value described above (preferably 70,000, more preferably 60,000, furthermore preferably 50,000) causes more excellent results in compatibility of copolymer (A) and curing agent (B) and heated fluidity of copolymer (A). Moreover, due to them, it causes more excellent results in appearance characteristics such as smoothness and cloudiness of the resulting paint film. Mn of silicone macromer (a3) was determined by gel permeation chromatography (GPC) using polystyrene as a standard.

Specific examples of silicone macromer (a3) include silicone macromers that are copolymerizable with other comonomers, have at least two, more preferably at least five, Si atoms (or siloxane bonds) in the molecule, have an unsaturated double bond at one end or both ends of the molecular chain, and have Mn of 1,000 to 70,000.

Such silicone macromer (a3) can be prepared by well-known method. For example, the methods disclosed in Japanese Patent Laid-Open No. 78236/'84 are preferably used. That is, a polydimethylsiloxane macromer can be prepared by subjecting lithium trimethylsilylsilanolate to anionic living polymerization and stopping the reaction with a methacryloyl-containing chlorosilane. A silicone macromer having a well-controlled molecular weight distribution characterized by a number-average molecular weight of about 4,000 and an Mw/Mn ratio of 1.05 to 1.10 can be obtained by reacting it at 0°C in tetrahydrofuran and stopping the reaction with 5-(methacryloyloxy)pentyldimethylchlorosilane.

Preferred silicone macromers (a3) have the following general structural formula (I): 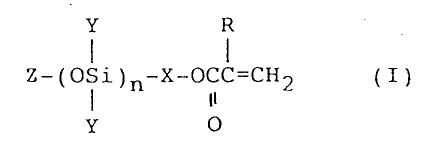
where
R is H or CH₃,
X is a divalent organic group (preferably C1-C30 alkylene, more preferably C2-C20 alkylene, and they may have substituents containig Si, N, P, O, S and the like),
Y is independently CH₃ or phenyl,
Z is H, SiH, CH₃, or phenyl, and
n is in the range of 2 to 1,000 (preferably in the range of 2 to 500)
Even if Z is H, OH, OCH₃ or phenoxy in the silicone macromers of (I), the groups do not so effect that it cause to undergo gelation of the resin component or to reduce storage stability of the paint composition. Therefore, even if Z is such group, the silicone macromers of (I) are within the concept of silicone macromer (a3) having essentially no reactive functional group other than an unsaturated double bond in the present invention.

Examples of silicone macromer (a3) which is commercially available include Silicone Macromonomer AK-5, Silicone Macromonomer AK-30 and Silicone Macromonomer AK-32 (all being trade names and manufactured by Toagosei Chemical Industry Co., Ltd.).

Silicone macromer (a3) is used in an amount of 0.005 to 2.0 parts by weight, preferably 0.01 to 1.0 part by weight and more preferably 0.01 to 0.5 part by weight, per 100 parts by weight of the combination of monomers (a1) and (a2). If the amount of silicone macromer (a3) used is decreased to less than 0.005 part by weight, the resulting coating film tends to show a corresponding reduction in such properties as solvent resistance, acid rain resistance and mar resistance. On the other hand, if the amount of silicone macromer (a3) used is increased to greater than 2.0 parts by weight, the compatibility of copolymer (A) and curing agent (B) shows a correspondingly decreasing tendency and, moreover, the resulting coating film tends to show a corresponding reduction in appearance characteristics (such as brightness) and recoatability.

### [Copolymer (A)]

No particular limitation is placed on the type of copolymer (A) used in the present invention, provided that it is a copolymer obtained by radical copolymerization in a reaction system containing monomer (a1), monomer (a2) and silicone macromer (a3) described above in a ratio of 0.005 to 2.0 parts by weight of silicone macromer (a3) per 100 parts by weight of the combination of monomers (a1) and (a2). It may be one or more such compounds. When a silicone macromer having an unsaturated double bond at end of the molecular chain such that of formula (I) is used, graft copolymer (A) having siloxane bonds-containing side chains.

Copolymer (A) is preferably prepared so as to have a glass transition point (Tg) in the range of 20 to 100°C. The use of copolymer (A) having Tg of not less than 20 °C causes excellent results in storage stability of the paint composition and the like. On the other hand, the use of copolymer (A) having Tg of not more than 100 °C causes excellent results in preventing the reduction in heated fluidity and in, due to it, appearance characteristics such as smoothness of the resulting paint film. Tg of copolymer (A) can be calculated according to the equation of Fox.

The number-average molecular weight (Mn) of copolymer (A) is preferably in the range of 2,000 to 10,000 and more preferably in the range of 2,500 to 6,000. The use of copolymer (A) having Mn of not less than the specific value described above (preferably 2,000, more preferably 2,500) causes more excellent results in storage stability of the paint composition and the like. On the other hand, the use of copolymer (A) having Mn of not more than the specific value described above (preferably 10,000, more preferably 6,000) causes excellent results in appearance characteristics such as smoothness of the resulting paint film. Mn of copolymer (A) was determined by GPC using polystyrene as a standard.

As previously described, the Mn of monomer (a3) is preferably in comparatively high range (1,000 to 70,000). However, since monomer (a3) is used in an small amount (0.005 to 2.0 parts by weight per 100 parts by weight of the combination of monomers (a1) and (a2)), the high Mn of monomer (a3) contributes little to the Mn of copolymer (A).

Copolymer (A) can be prepared by any of radical polymerization techniques including solution polymerization, emulsion polymerization, suspension polymerization and bulk polymerization. Among others, solution polymerization is preferred.

In order to control the molecular weight of copolymer (A), polymerization may be carried out, for example, in the presence of a chain transfer agent selected from mercaptans (such as dodecyl mercaptan), disulfides (such as dibenzoyl sulfide), C₁₋₁₈ alkyl esters of thioglycolic acid (such as 2-ethylhexyl thioglycolate) and halogenated hydrocarbons (such as carbon tetrabromide), or in the presence of an organic solvent having a significant chain transfer effect, such as isopropyl alcohol, isopropylbenzene or toluene.

### [Curing agent (B)]

No particular limitation is placed on the type of curing agent (B) used in the present invention, provided that it is a compound having at least two functional groups capable of crosslinking reaction with the non-radical-polymerizable reactive functional group in copolymer (A). It may be one or more such compounds. For example, the functional groups in curing agent (B) capable of crosslinking reaction with the non-radical-polymerizable reactive functional group in copolymer (A) are, preferably, carboxyl groups, acid anhydride groups or isocyanate groups. That is, curing agent (B) is preferably selected form class consisting of from compound (b1) containing carboxyl groups in the molecule, compound (b2) containing acid anhydride groups in the molecule, and compound (b3) containing isocyanate groups in the molecule.

Moreover, curing agent (B) may be selected in accordance with the type of the non-radical-polymerizable reactive functional group in monomer (a1). That is, when the non-radical-polymerizable reactive functional group in monomer (a1) is glycidyl group, the functional groups in curing agent (B) are preferably carboxyl groups and/or acid anhydride groups. On the other hand, when the non-radical-polymerizable reactive functional group in monomer (a1) is hydroxyl group, the functional groups in curing agent (B) are preferably isocyanate groups and/or acid anhydride groups.

Compound (b1) containing carboxyl groups is preferably at least one aliphatic compound containing at least two carboxyl groups per molecule but having no acid anhydride group (aliphatic polycarboxylic acid). The aliphatic polycarboxylic acids causes more excellent results in coating film properties such as smoothness, impact resistance, weather resistance and the like in comparison with aromatic polycarboxylic acids. It is more preferably an aliphatic dicarboxylic acid, furthermore preferably an aliphatic dicarboxylic acid having 8-20 carbon atoms.

The concept of the term "aliphatic" as used in the specification of the present application comprehends alicyclic polycarboxylic acids having a low degree of aromaticity. The alicyclic polycarboxylic acids having a low degree of aromaticity cause excellent results in coating film properties.

Specific examples of compound (b1) containing carboxyl groups include succinic acid, glutaric acid, adipic acid, pimelic acid, suberic acid, azelaic acid, sebacic acid, malic acid, citric acid, maleic acid, citraconic acid, itaconic acid, glutaconic acid, undecanedioic acid, dodecanedioic acid, pentadecanedioic acid, tridecanedioic acid, tetradecanedioic acid, hexadecanedioic acid, octadecanedioic acid, eicosanedioic acid, docosanedioic acid, tetracosanedioic acid, aspartic acid and glutamic acid. Among them, adipic acid, azelaic acid, sebacic acid, dodecanedioic acid and eicosanedioic acid are preferred.

Compound (b2) containing acid anhydride groups is preferably at least one aliphatic anhydride containing at least two anhydride groups per molecule. The concepts of the terms "anhydride", "anhydride group", "anhydride linkage" and "polyanhydride" used in the claims and specification of the present application comprehend the concepts of the respective terms as described under the head of "polyanhydride" in MARUZEN's Comprehensive Dictionary of Polymers" (Maruzen, 1994), pp. 996-998.

The concept of the term "acid anhydride" used in the claims and specification of the present application comprehends the concept described under the head of "acid anhydride" in "Encyclopedia Chimica", Vol. 3 (Kyoritsu Shuppan, 1963), p. 996, left column to p. 997, right column.

Polyanhydrides were intensively studied by investigators at MIT and came to attract attention, in the early 1980's when research and development concerning biodegradable biopolymer (or medical polymer) materials and their application to drug delivery systems was actively carried on.

Compound (b2) containing acid anhydride groups is preferably a linear dimeric or higher, oligomeric or polymeric aliphatic acid anhydrides with or without one or more carboxyl groups effectively present in the molecule, and having at least two carboxyl and/or acid anhydride groups effectively present in the molecule (hereinafter referred to as "aliphatic polycarboxylic linear acid anhydride (b2)").

The concept of the term "linear" as used herein comprehends not only linear dimeric or higher, oligomeric or polymeric aliphatic acid anhydrides, but also such linear acid anhydrides forming a macrocyclic configuration.

Specific examples of such aliphatic polycarboxylic linear acid anhydrides include linear polycondensation products obtained by the condensation of one or more aliphatic polycarboxylic acids with the elimination of water. Linear co-polycondensation products obtained by the copolymerization of two or more aliphatic polycarboxylic acids can also be used.

Linear dimeric or higher, oligomeric or polymeric aliphatic acid anhydrides can be synthesized, for example, by such techniques as melt polycondensation, solution polycondensation and interfacial polycondensation.

Some linear polycondensation products obtained by the condensation of one aliphatic polycarboxylic acid with the elimination of water, which can be used as aliphatic polycarboxylic linear acid anhydrides, can be represented by the following general formula:

HO-[-OC(CH₂)ₘCOO-]ₙ-H

where m is an integer of 1 or more, preferably 30 or less, and n is an integer of 2 or more.

Aliphatic polycarboxylic linear acid anhydride (b2) is preferably an oligomeric or polymeric aliphatic anhydrides derived by the condensation of compound (b1) with the elimination of water. Among these, condensation products obtained by the condensation of at least one compound selected from the class consisting of adipic acid, pimelic acid, suberic acid, azelaic acid, sebacic acid, undecanedioic acid, dodecanedioic acid, eicosanedioic acid and octadecanedioic acid with the elimination of water or a combination thereof are preferred. Especially, linear condensation products obtained by the condensation of at least one compound selected from the class consisting of adipic acid, azelaic acid, sebacic acid, dodecanedioic acid and eicosanedioic acid with the elimination of water or a combination thereof are more preferred.

If a cyclic acid anhydride derived from an (aliphatic) polycarboxylic acid, such as succinic anhydride or phthalic anhydride, is reacted with copolymer (A), it is highly probable that the anhydride reacts only with the epoxy rings of certain glycidyl groups present in the molecule of copolymer (A). Thus, the acid anhydride is not very effective in crosslinking a plurality of copolymer (A) molecules. In contrast, if a linear condensation product obtained by the (co)polymerization of one or more aliphatic polycarboxylic acids is reacted with copolymer (A), the condensation product is cleaved at the acid anhydride groups to produce a plurality of fragments, and these fragments react with the glycidyl groups present in different copolymer (A) molecules. Thus, the condensation product exhibits the effect of crosslinking a plurality of copolymer (A) molecules.

When a combination of an aliphatic polycarboxylic acid (b1) and an aliphatic polycarboxylic linear acid anhydride (b2) is used as curing agent (B), more favorable results are produced as compared with the use of an aliphatic polycarboxylic acid (b1) or an aliphatic polycarboxylic linear acid anhydride (b2) alone.

When they are used together, suitable examples of aliphatic polycarboxylic acid (b1) and aliphatic polycarboxylic linear acid anhydride (b2) are same as that described above. Furthermore, the use of condensation products of aliphatic dicarboxylic acid (which is the same as the acid (b1) used) as aliphatic polycarboxylic linear acid anhydride (b2) causes excellent results in coating film properties such as smoothness and brightness. Among others, a combination of adipic acid, azelaic acid, sebacic acid, dodecanedioic acid or eicosanedioic acid as aliphatic dicarboxylic acid (b1), and a product obtained by the condensation thereof as aliphatic polycarboxylic linear acid anhydride (b2) is preferred. A combination of dodecanedioic acid and a product obtained by the condensation thereof with the elimination of water is more preferred.

Compound (b3) containing isocyanate groups is preferably at least one aliphatic compound having two or more isocyanate groups per molecule (aliphatic polyisocyanate). The aliphatic polyisocyanate causes more excellent results in preventing yellowing, weather resistance and the like in comparison with aromatic polyisocyanate. It is preferably a compound blocked isocyanate compound having its isocyanate groups protected with a blocking agent or a compound having its isocyanate groups protected so as to form uretodione group.

Specific examples of compound (b3) containing isocyanate groups include isophorone diisocyanate, hexamethylene diisocyanate, hydrogenated xylene diisocyanate, dicyclohexylmethane diisocyanate, 2,4,4-trimethyl-1,6-hexamethylene diisocyanate, 2,6-diisocyanatomethyl caproate, 3-isocyanatomethyl-3,5,5-trimethylcyclohexyl isocyanate, dicyclohexylmethane-4,4'-diisocyanate, methylcyclohexyl-2,4-diisocyanate, 2,5- and/or 2,6-diisocyanatomethylbicyclo[2.2.1]heptane, their dimers or trimers having a uretodione or isocyanurate ring, chlorinated or brominated derivatives of the foregoing diisocyanates, and polyisocyanate compounds formed by the addition reaction of these diisocyanates with water.

Preferred examples are polyisocyanate compounds formed by the reaction of the above-enumerated isocyanate compounds with polyols such as ethylene glycol, diethylene glycol, trimethylolpropane, pentaerythritol, butanediol, hexanediol, neopentyl glycol and hydrogenated bisphenol A, and blocked polyisocyanate compounds obtained by protecting such compounds with a blocking agent.

Useful blocking agents include, for example, lactams, phenols, alcohols, oximes, malonic esters and acetylacetone.

Curing agent (B) should preferably have a melting point in the range of 40 to 150°C. The use of curing agent (B) having a melting point of not less than 40°C causes more excellent results in storage stability of the powder paint composition. On the other hand, the use of curing agent (B) having a melting point of not more than 150°C causes more excellent results in fluidity during baking and smoothness of the resulting coating film.

Curing agent (B) is preferably used in such an amount as to provide 0.7 to 1.5 equivalents of functional groups in curing agent (B) capable of crosslinking reaction with the non-radical-polymerizable reactive functional group in copolymer (A), per equivalent of the non-radical-polymerizable reactive functional group in copolymer (A). The use of curing agent (B) in the specific amount causes more excellent results in the paint film properties.

For example, where curing agent (B) comprises comound (b1) alone, compound (b1) is preferably used in such an amount as to provide 0.7 to 1.5 equivalents of carboxyl group per equivalent of the reactive functional groups (e.g., glycidyl groups) in copolymer (A). For example, where curing agent (B) comprises compounds having acid anhydride groups (particularly, aliphatic polycarboxylic linear acid anhydride (b2)) it is preferably used in such an amount as to provide 0.7 to 1.5 equivalents of acid anhydride and/or carboxyl groups per equivalent of the reactive functional groups (e.g., glycidyl groups, hydroxyl groups) in copolymer (A). Especially, the use of aliphatic polycarboxylic linear acid anhydride (b2) in an amount of not more than 1.5 equivalent causes more excellent effect in the storage stability of the paint composition at the same time. For example, where curing agent (B) comprises a combination of an aliphatic polycarboxylic acid (b1) and an aliphatic polycarboxylic linear acid anhydride (b2), it is preferably used in such an amount as to provide 0.7 to 1.5 equivalents of carboxyl and acid anhydride groups per equivalent of the functional groups (e.g., glycidyl groups, hydroxyl groups) in copolymer (A). For example, where curing agent (B) comprises compound (b3) alone, it is preferably used in such an amount as to provide 0.7 to 1.5 equivalents of isocyanate group per equivalent of the functional groups (e.g. hydroxyl groups) in copolymer (A).

### [Curing catalyst]

A suitable curing catalyst may be used to promote the crosslinking reaction or curing reaction of copolymer (A) and curing agent (B) and thereby complete it at a lower temperature in a shorter time. No particular limitation is placed on the type of the curing agent, provided that it can promote the crosslinking reaction or curing reaction of copolymer (A) and curing agent (B) and thereby complete it at a substantially lower temperature in a substantially shorter time. Specific examples of the curing catalyst include, but not limited to, amines, phosphines, imidazoles, and metallic salts of organic carboxylic acids. The curing catalyst is generally used in an amount of 0.001 to 10 parts by weight, preferably 0.01 to 5 parts by weight, per 100 parts by weight of the combination of copolymer (A) and curing agent (B).

### [Additives]

The heat-curable powder paint compositions of the present invention can suitably contain synthetic resin compositions (including epoxy resins, polyester resins, polyamides and the like) and/or natural and semisynthetic resin compositions (including cellulose, cellulose derivatives and the like), according to the intended purpose.

The heat-curable powder paint compositions of the present invention can suitably contain such additives as pigments, flow modifiers, thixotropic agents, surface modifiers, brighteners, antiblocking agents, plasticizers, electrostatic controllers, ultraviolet light absorbers, anti-popping agents and antioxidants, according to the intended purpose.

Specific examples of antiblocking agents suitable for use in the heat-curable powder paint compositions of the present invention include, but not limited to, aliphatic amides such as acetamide, propionamide, stearamide and cerotamide; bis(aliphatic amides) such as diacetamide, bis(oleamide), bis(lauramide), methylenebis(stearamide) and ethylenebis(stearamide); higher fatty acid esters such as myricyl cerotate, butylene glycol dimontanate and tri-1,2-hydroxystearic acid glyceryl ester; and polyethylene having a molecular weight of 1,000 to 10,000, atactic polypropylene and partially oxidized polyolefins derived therefrom. Antiblocking agents are usually added in an amount of not greater than 10 parts by weight per 100 parts by weight of the heat-curable powder paint composition of the present invention.

Specific examples of surface modifiers suitable for use in the heat-curable powder paint compositions of the present invention include, but not limited to, homopolymeric or copolymeric oligomers formed from acrylic ester monomers or styrenic monomers, metallic salts of perfluorocarboxylic acids or perfluorosulfonic acids, esters formed from polyethylene glycol or polypropylene glycol and perfluorocarboxylic acids. Surface modifiers are usually added in an amount of not greater than 5 parts by weight per 100 parts by weight of the heat-curable powder paint composition of the present invention.

Specific examples of pigments suitable for use in the heat-curable powder paint compositions of the present invention and capable of imparting a desired color thereto include, but not limited to, inorganic pigments such as titanium oxide, iron oxide, chromium oxide and carbon black; and organic pigments such as Phthalocyanine Blue, Phthalocyanine Green and Cinquacia Red.

Specific examples of plasticizers suitable for use in the heat-curable powder paint compositions of the present invention include, but not limited to, adipic acid esters, phosphoric acid esters, phthalic acid esters, sebacic acid esters, polyesters derived from adipic acid or azelaic acid, and epoxy plasticizers.

Where a heat-curable powder paint composition of the present invention is used as a clear coat, pigments may be added thereto in an amount which can effectively color the coat without developing perfect hiding power.

The preparation (or compounding) of heat-curable powder paint compositions of the present invention can be conducted according to any of various well-known and commonly used methods provided that provided that copolymer (A) and curing agent (B) can be effectively blended in a desired proportion. In one exemplary method, the components are intimately blended under properly chosen process conditions (such as temperature, melting or no melting, rotational speed, and vacuum or inert gas atmosphere) by using a suitable combination of mixing and kneading machines including, for example, roll mills, kneaders, mixers (such as Banbury mixers and transfer mixers), calendering equipment and extruders. Then, the resulting blend is ground on a grinding mill to obtain a powder paint in the form of a homogeneous finely-divided powder. However, it is to be understood that the present invention is not limited thereto.

In one embodiment of the blending/kneading process for incorporating additives and the like into a heat-curable powder paint composition in accordance with the present invention, additives such as antiblocking agents, surface modifiers, plasticizers, electrostatic controllers, pigments, fillers and extenders are added to copolymer (A) and curing agent (B) as required, and the resulting mixture is fully melt-blended at a temperature in the range of preferably 40 to 130°C, more preferably 60 to 130°C and cooling to obtain the heat-curable powder paint composition of the present invention. The blend is uniformly ground to a desired particle size (usually 150 mesh or less) to fine powder paint. Usually, a heating roll mill, a heating kneader, an extruder or the like is used as the melt-blending machine.

In one exemplary method for the application of powder paint consisting of the composition of the present invention, the heat-curable powder paint is deposited on an object according to a coating technique such as electrostatic coating or fluidized bed coating, and then cured by the application of heat to form a coating film. The baking is conducted at a temperature of usually about 100 to about 200°C, preferably about 120 to about 180°C, for a time of about 10 to about 60 minutes. By the baking, the crosslinking reaction of copolymer (A) and curing agent (B) can be effected. After baking and cooling to room temperature, there is obtained a coating film having excellent properties.

Because the heat-curable powder paint composition of the present invention has the excellent properties described above, it is especially useful for a method of coating an automobile body or part. Particularlly, it is very usefull for a method of overcoating an automobile body or part with powder paint consisting of composition of the present invention, a coating method which comprises electrostatically depositing an over-coating material comprising powder paint consisting of composition of the present invention on an undercoating material comprising a pigment-loaded or metallic water paint, and baking the undercoating material and the overcoating material at the same time, and a method of intercoating an automobile body or part with powder paint consisting of composition of the present invention.

The present invention is more specifically explained with reference to the following examples and comparative examples. These examples are intended to aid in understanding the practice of the present invention and are not to be construed to limit the scope of the present invention. In these examples, all parts and percentages are by weight unless otherwise stated.

### Preparation Example 1 [Preparation of copolymer A-1]

As a reactor, there was provided a four-necked flask fitted with a stirrer, thermometer, reflux condenser and a nitrogen inlet tube. Polymerization was carried out according to a solution polymerization technique described below.

First, the reactor was charged with xylene used as an organic solvent, and heated to the reflux temperature with stirring. The xylene was used in an amount corresponding to 66.7% of the combined amount of subsequently charged monomers. While the system was held at the reflux temperature with stirring, monomers were charged in the respective amounts shown in the column of Table 1 which is headed "Preparation Example 1".

Then, while the system was held at the reflux temperature with stirring, a polymerization initiator was added dropwise thereto in the amount shown in the column of Table 1 which is headed "Preparation Example 1", over a period of 5 hours beginning immediately after the charging of the monomers. This polymerization initiator was t-butyl peroxy-2-ethylhexanoate (manufactured and sold by Nippon Oil & Fats Co., Ltd. under the trade name of "Perbutyl O"). Then, the system was held at the reflux temperature with stirring for a period extending from 5 hours to 6 hours after the start of the reaction (that is, immediately after the charging of the monomers). Subsequently, while the system was held at 100°C with stirring, the polymerization initiator was further added dropwise thereto in an amount corresponding to 0.5% of the combined weight of the charged monomers, over a period extending from 6 hours to 8 hours after the start of the reaction. Eight hours after the start of the reaction, copolymer A-1 was recovered by removing the solvent from the resulting polymerization solution.

Some properties of the recovered copolymer A-1 were analyzed according to the following procedures and the result thus obtained are shown in Table 1.
(1) Glass transition point (Tg): This was calculated from the monomer composition according to the equation of Fox.
(2) Number-average molecular weight (Mn): This was determined by GPC using polystyrene as a standard.

### Preparation Examples 2-10 [Preparation of copolymers A-2 to A-7 and A'-8 to A'-10]

In Preparation Examples 2-10, copolymers A-2 to A-7 and A'-8 to A'-10 were obtained by carrying out reaction and recovery in the same manner as in Preparation Example 1, except that the amounts of monomers charged and the amount of polymerization initiator added over a period of 5 hours beginning immediately after the charging of the monomers were varied. The amounts of monomers charged in Preparation Examples 2-10 are shown in the respective columns of Table 1 which are headed "Preparation Examples 2-10" and "Monomers". Similarly, the amounts of polymerization initiator added over a period of 5 hours beginning immediately after the charging of the monomers in Preparation Examples 2-10 are shown in the respective columns of Table 1 which are headed "Preparation Examples 2-10" and "Polymerization initiator".

Some properties of the recovered copolymers A-2 to A-7 and A'-8 to A'-10 were analyzed in the same manner as in Preparation Example 1 and the results thus obtained are shown in Table 1.

### Preparation Example 11 [Preparation of dodecanedioic linear acid anhydride (b2)]

A reactor was charged with dodecanedioic acid and acetic anhydride (mole ratio = 1:1.1). While the system was kept under reduced pressure or in vacuo so that the acetic anhydride did not flow out of the system, this mixture was heated to 150°C and reacted for 5 hours with removal of the formed acetic acid. After completion of the reaction, the reaction mixture was immediately cooled to obtain a white solid (dodecanedioic linear acid anhydride (b2)). This compound had a melting point of about 76 to about 79°C.

### Examples 1-10 and Comparative Examples 1-5

### [Preparation of heat-curable powder paint compositions]

The copolymers prepared in Preparation Examples 1-10 and various curing agents were mixed according to the respective formulations shown in Tables 2 and 3 (functional groups in curing agent (B) / non-radical-polymerizable reactive functional group in copolymer (A) = 1/1). Moreover, 1 part of trade name Tinuvin 144 (light stabilizer; manufactured by Ciba-Geigy), 1 part of benzoin (anti-popping agent), 2 parts of trade name Tinuvin 900 (ultraviolet light absorber; manufactured by Ciba-Geigy), and 0.3 part of tin octoate (curing catalyst; used only in Examples 8-10) were added per 100 parts by weight of the combination of copolymer and curing agent. Then, powder paints were obtained by melt-blending each of the above mixtures at 90°C on a heating roll mill, pulverizing the resulting blend with a grinding mill, and recovering a fraction having passed through a 150 mesh screen.

### [Coating with heat-curable powder paints]

Satin-finished steel plates of 0.8 mm thickness which had been treated with zinc phosphate were coated with a polyester-melamine crosslinking black paint to a thickness of 30 µm. Thereafter, the paint film was baked to obtain primed steel plates. Then, the powder paints prepared in the above-described manner were electrostatically deposited on the primed steel plates to a film thickness of 30 to 60 µm and baked at 140°C for 30 minutes (or at 180°C for 30 minutes in Examples 8-10) to obtain coated sample plates.

These coated sample plates were evaluated according to the following procedures, most of which are described in JIS K5400.
(1) Smoothness of coating film: With respect to smoothness, the appearance of the coating film was evaluated by visual inspection and rated as very smooth (ⓞ), smooth (○), slightly rough (△) or poor (X).
(2) Brightness of coating film: With respect to brightness, the appearance of the coating film was evaluated by visual inspection and rated as very bright (ⓞ), bright (○), slightly cloudy (△) or poor (X).
(3) Gloss: This was evaluated on the basis of the 60° gloss value measured with a gloss meter.
(4) Impact resistance: This was evaluated by measurement with a Du Pont impact tester (1/2 inch x 1 kg load).
(5) Solvent resistance: The surface of the coating film was rubbed back and forth with a piece of gauze soaked with xylol. After the rubbing was repeated 50 times, the rubbed part was observed visually. The coating film was rated as very good (ⓞ) when no marks were observed, good (○) when slight marks were observed, or poor (X) when distinct marks were observed.
(6) Acid rain resistance: It was evaluated under the following two conditions (i) and (ii):
   (i) The surface of the coating film was spotted with 0.4 ml of a 40 vol.% aqueous solution of sulfuric acid and allowed to stand in a drying oven at 70°C for 20 minutes. After the spotted part was washed with water and dried, the surface condition of the coating film was observed visually. The, coating film was rated as very good (ⓞ) when no marks were observed, good (○) when slight marks were observed, fair (△) when distinct marks were observed, or poor (X) when etching was observed all over the spotted part.
   (ii) The surface of the coating film was spotted with 0.2 ml of a pH 3.5 aqueous solution of sulfuric acid and allowed to stand in a drying oven at 90°C for hour. After the spotted part was washed with water and dried, the surface condition of the coating film was observed visually. The rating of the coating film was same as that in condition (i).
   (7) Mar resistance: The coating film was subjected to an abrasion test in which the surface of the coating film was brushed in she presence of a 0.3% cleanser suspension. Its gloss was measured before and after brushing, and the retention of gloss was calculated. When the retention of gloss was 60 or greater, the coating film can be judged to be mar-resistant.
   (8) Weather resistance: The coating film was irradiated in a QUV tester for 3,000 hours. Its gloss was measured before and after irradiation, and the retention of gloss was calculated. The coating film was rated as very good (ⓞ) When the retention of gloss was greater than 80%, good (○) then it was 70-80%, or poor (X) when it was less then 70%.
   (9) Storage stability: The powder paint compositions were stored for 30 days in a thermostatic chamber at 30°C. Thereafter, each of the powder paint compositions was formed into a 0.6 g pellet having a diameter of 10 mm. This pellet was affixed to a satin-finished steel plate of 0.8 mm thickness which had been treated with zinc phosphate. This steel plate was held in a vertical position and maintained at 140°C for 30 minutes (or at 180°C for 30 minutes in Examples 8-10). Thus, the heated fluidity (mm) of the pellet was measured. The storage stability of the powder paint composition was rated as good (○) when the heated fluidity of the pellet was greater than 20 mm, fair (△) when it was 10-20 mm, or poor (X) when it was less than 10 mm.
   (10) Recoatability: The coating film obtained in each of the examples and comparative examples was coated with the same powder paint composition as used to form the coating film, and then baked at 140°C for 30 minutes (or at 180°C for 30 minutes in Examples 8-10). The resulting coating film was subjected to a checkered adhesion test and the result was expressed by the number of the squares which were not peeled off but remained intact after the test. The coating film which was not peeled off at all had a score of 100 and its recoatability can be rated as good.

### [Evaluation of the coating films formed from the heat-curable powder paints]

The results of evaluation of the coating films obtained in the above-described manner are shown in Tables 2 and 3. Examples 1-10 illustrate compositions in which the types of components and the combination thereof were varied within the present invention. Comparative Examples 1-5 illustrate compositions in which the types of components and the combination thereof were varied outside the present invention for comparing them to the compositions of the present invention.

As is evident from the results of evaluation of Examples 1-10, the compositions of the present invention has excellent performance simultaneously with respect to the evaluations (1) to (10).

Comparative Example 1 illustrates a composition in which copolymer (A'-8) obtained from the reaction system containing no silicone macromer (a3) was used. The resulting coating film was very poor in solvent resistance, acid rain resistance and mar resistance.

Comparative Example 2 illustrates a composition in which copolymer (A'-9) obtained from the reaction system containing silicone macromer (a3) in an excessively large amount outside the scope of the present invention was used. The resulting coating film was poor in brightness, solvent resistance and recoatability.

Comparative Example 3 illustrates a composition in which copolymer (A'-10) obtained by copolymerizing a silicone monomer (γ-methacryloxypropylmethyldimetoxysilane) having reactive functional groups other than an unsaturated double bond (in place of silicone macromer (a3)) with the other monomers, was used. In this case, the paint composition was very poor in storage stability and, moreover, the resulting coating film was very poor in smoothness, brightness, acid rain resistance, solvent resistance, mar resistance and recoatability.

Comparative Example 4 illustrates a composition in which a silicone compound (methylphenypolysiloxane, trade name TSF 437, manufactured by Toshiba Silicone Co., Ltd.) having no reactive functional group was added therein in place of silicone macromer (a3). In this case, the resulting coating film was poorer in solvent resistance, acid rain resistance, weather resistance and recoatability than that obtained in any other example.

Comparative Example 5 illustrates a compound in which a silicone resin (trade name SH 6018, manufactured by Toray-Dow Corning Silicone Co., Ltd.) having silanol groups (reactive functional groups) in the molecule was added therein in place of silicone macromer (a3). In this case, the appearance and properties of the coating film and the storage stability of the powder paint composition were very poor.

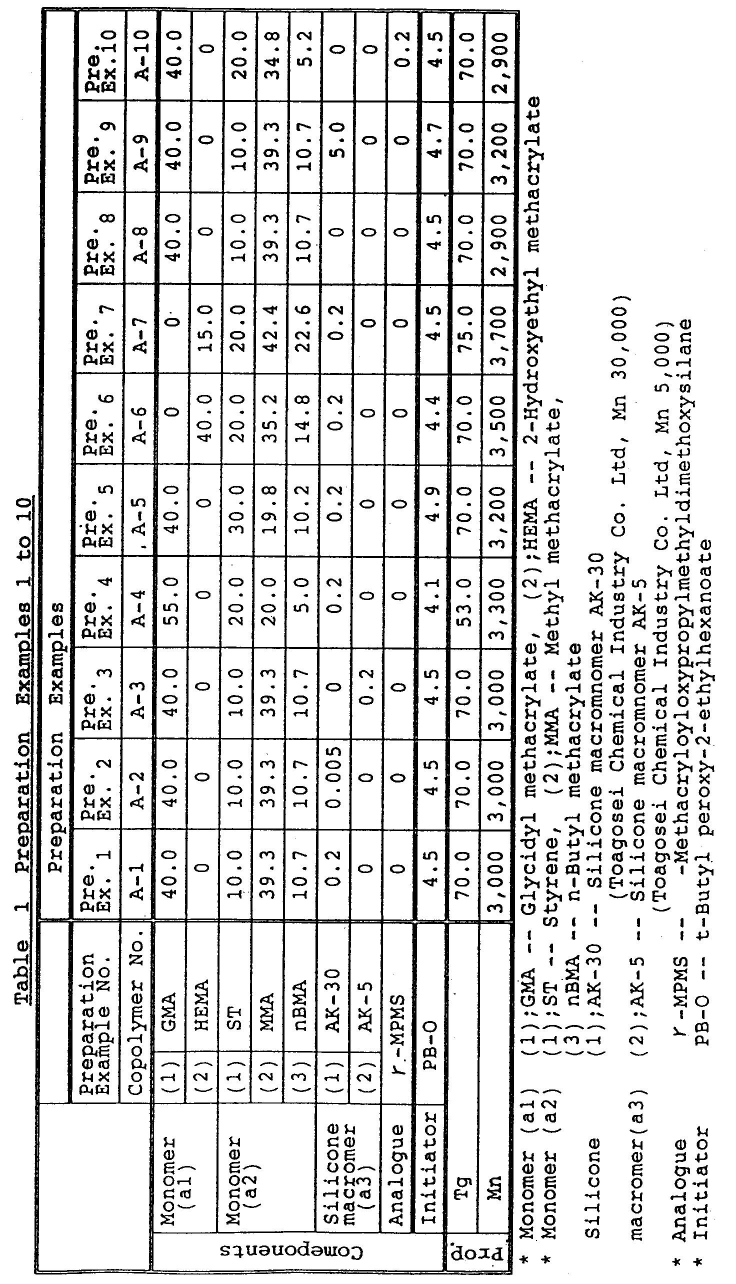

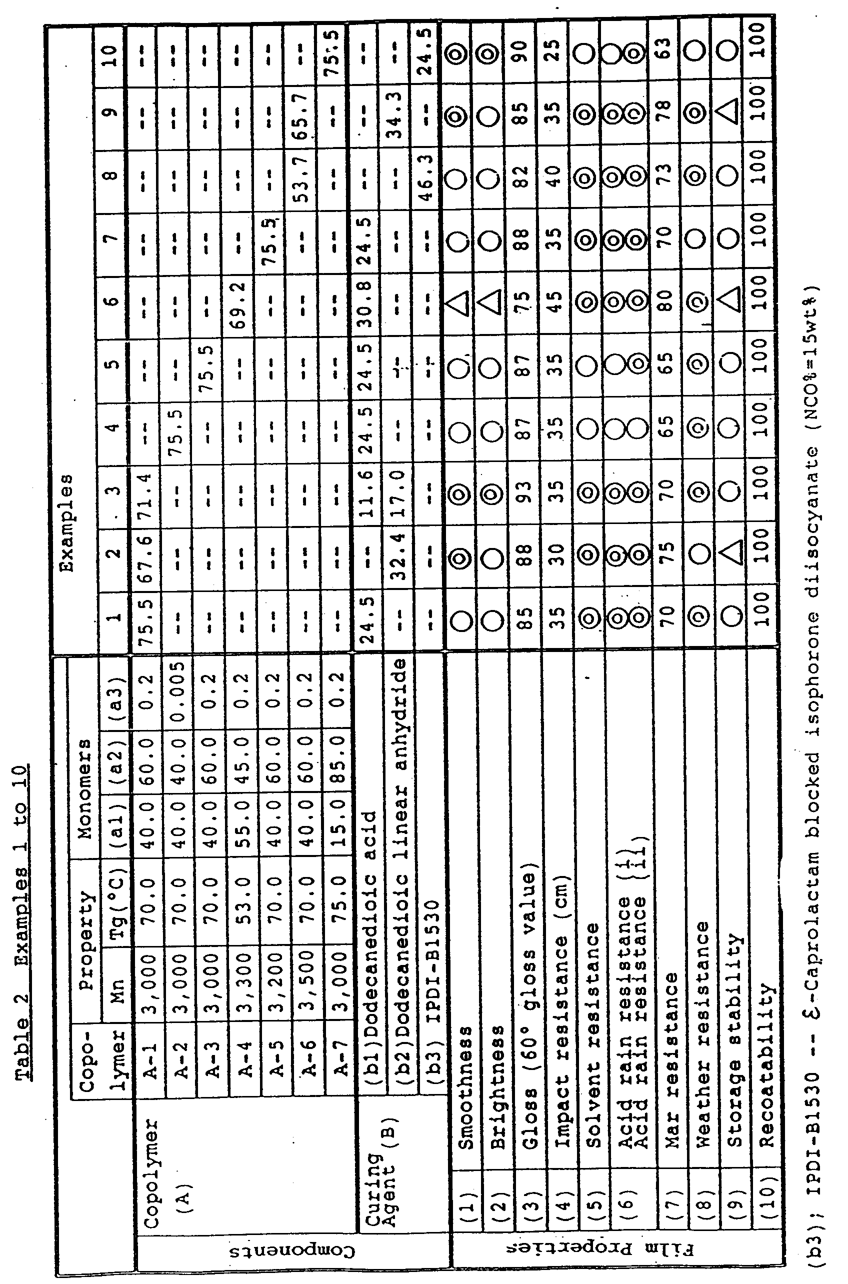

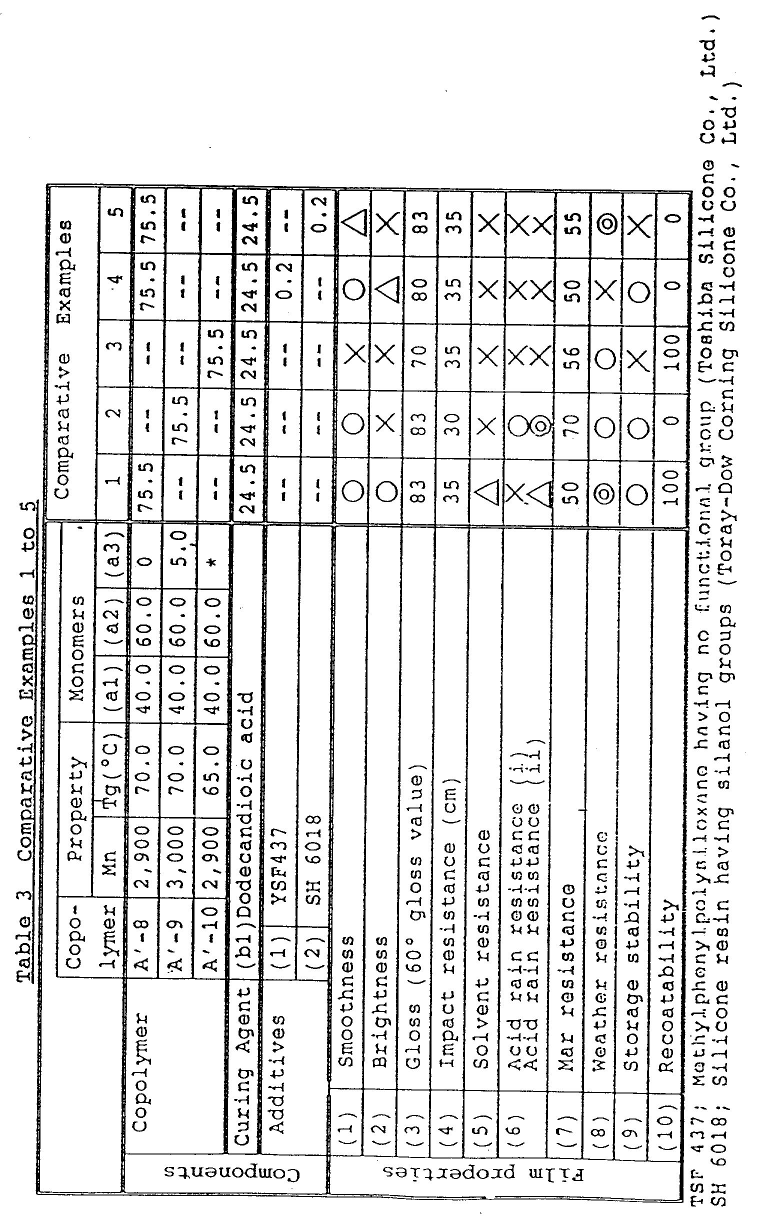

## Claims

1. A heat-curable powder paint composition comprising a copolymer (A) and a curing agent (B)
wherein copolymer (A) is obtained by radical copolymerization in a reaction system containing
(a1) at least one monomer having both at least one radical-polymerizable unsaturated double bond and at least one non-radical-polymerizable reactive functional group in the molecule,
(a2) at least one monomer having at least one radical-polymerizable unsaturated double bond in the molecule but having no reactive functional group other than an unsaturated double bond, and
(a3) at least one silicone macromer having at least one radical-polymerizable unsaturated double bond in the molecule but having essentially no reactive functional group other than an unsaturated double bond,
in a ratio of 0.005 to 2.0 parts by weight of silicone macromer (a3) per 100 parts by weight of the combination of monomers (a1) and (a2); and
curing agent (B) has, in the molecule, at least two functional groups capable of crosslinking reaction with the non-radical-polymerizable reactive functional group in copolymer (A).

2. The heat-curable powder paint composition as claimed in claim 1 wherein the non-radical-polymerizable reactive functional group in monomer (a1) comprises at least one group selected from the class consisting of glycidyl and hydroxyl groups, and the functional groups in curing agent (B) which are capable of crosslinking reaction with the non-radical-polymerizable reactive functional groups in copolymer (A) comprise at least one group selected from the class consisting of carboxyl, acid anhydride and isocyanate groups.

3. The heat-curable powder paint composition as claimed in claim 1 wherein the non-radical-polymerizable reactive functional group in monomer (a1) comprises a glycidyl group, and the functional groups in curing agent (B) which are capable of crosslinking reaction with the non-radical-polymerizable reactive functional groups in copolymer (A) comprise at least one group selected from the class consisting of carboxyl and acid anhydride groups.

4. The heat-curable powder paint composition as claimed in claim 1 wherein the non-radical-polymerizable reactive functional group in monomer (a1) comprises a hydroxyl group, and the functional groups in curing agent (B) which are capable of crosslinking reaction with the reactive functional groups in copolymer (A) comprise at least one group selected from the class consisting of isocyanate and acid anhydride groups.

5. The heat-curable powder paint composition as claimed in claim 1 wherein the reaction system contains 0.01 to 1.0 part by weight of the silicone macromer (a3) per 100 parts by weight of the combination of monomers (a1) and (a2).

6. The heat-curable powder paint composition as claimed in claim 1 wherein the number-average molecular weight of the silicone macromer (a3) is in the range of 1,000 to 70,000, preferably in the range of 3,000 to 60,000.

7. The beat-curable powder paint composition as claimed in claim 1 wherein the reaction system contains monomers (a1) and (a2) in amounts of 15 to 60 parts by weight and 40 to 85 parts by weight, monomer (a2) contains 1 to 30 parts by weight of styrene, respectively, per 100 parts by weight of the combination of monomers (a1) and (a2).

8. The heat-curable powder paint composition as claimed in claim 3 wherein the carboxyl and/or acid anhydride groups in curing agent (B) are present in an amount of 0.7 to 1.5 equivalents per equivalent of the glycidyl groups in copolymer (A).

9. The heat-curable powder paint composition as claimed in claim 4 wherein the isocyanate and/or acid anhydride groups in curing agent (B) are present in an amount of 0.7 to 1.5 equivalents per equivalent of the hydroxyl groups in copolymer (A).

10. The heat-curable powder paint composition as claimed in claim 1 wherein curing agent (B) is at least one compound selected from the class consisting of compoud (b1) containing carboxyl groups in the molecule, compoud (b2) containing acid anhydride groups in the molecule, and compoud (b3) containing isocyanate groups in the molecule, curing agent (B) has a melting point in the range of 40 to 150°C, compound (b1) is an aliphatic compound having at least two carboxyl groups per molecule but having no acid anhydride group, compound (b2) is a linear dimeric or higher, oligomeric or polymeric aliphatic acid anhydride with or without one or more carboxyl groups present in the molecule, and having at least two carboxyl and/or acid anhydride groups effectively present in the molecule, and compound (b3) is a compound having at least two isocyanate groups blocked with a blocking agent.

11. The heat-curable powder paint composition as claimed in claim 10 wherein both compound (b1) and compound (b2) are contained as curing agents (B), compound (b1) is an aliphatic dicarboxylic acid having 8 to 20 carbon atoms, and compound (b2) is at least one linear dimeric or higher, oligomeric or polymeric acid anhydride derived by the condensation of one or more compounds defined for said compound (b1) with the elimination of water.

12. The heat-curable powder paint composition as claimed in claim 10 wherein compound (b2) is a linear dimeric or higher, oligomeric or polymeric acid anhydride derived by the condensation of at least one compound selected from the class consisting of adipic acid, azelaic acid, sebacic acid, dodecanedioic acid and eicosanedioic acid with the elimination of water.

13. The heat-curable powder paint composition as claimed in claim 10 or 11 wherein compound (b1) is at least one compound selected from the class consisting of adipic acid, azelaic acid, sehacic acid dodecanedioic acid and eicosanedioic acid.

14. A method of coating an automobile body or part with the powder paint composition of any of the claims 1 to 13.

15. A method of overcoating an automobile body or part with the powder paint composition of any of the claims 1 to 13.

16. A coating method which comprises electrostatically depositing an overcoating material comprising the powder paint composition of any of the claims 1 to 13 on an undercoating material comprising a pigment-loaded or metallic water paint, and baking the undercoating material and the overcoating material at the same time.

17. A method of intercoating an automobile body or part with the powder paint composition of any of the claims 1 to 13.

18. A method of using the powder paint composition of any of the claims 1 to 13 for the purpose of forming a coating film.

19. A coating film formed from the powder paint composition of any of the claims 1 to 13.

20. An automobile or an automobile part coated with the powder paint composition of any of the claims 1 to 13.

21. A process for the preparation of a heat-curable powder paint which comprises melt-blending raw materials including copolymer (A) and curing agent (B) described in any of the claims 1 to 13 at a temperature of 40 to 130°C, cooling the resulting blend, and reducing the blend to powder.

22. A coating method which comprises depositing the powder paint composition of any of the claims 1 to 13 on an object, and baking it at a temperature of 100 to 200°C.

23. A coating method as claimed in claim 22 wherein the powder paint composition is deposited electrostatically on the object.
